# EUROPEAN PATENT SPECIFICATION

(11) **EP 3 971 582 B1**
(45) Date of publication and mention of the grant of the patent: **03.07.2024**
(21) Application number: 20805997.2
(22) Date of filing: 25.02.2020
(51) Int. Cl.: G01N 35/04, G01N 35/10, G01N 35/00

(54) **AUTOMATIC ANALYSIS DEVICE**
AUTOMATISCHE ANALYSEVORRICHTUNG
DISPOSITIF D'ANALYSE AUTOMATIQUE

(30) Priority: 15.05.2019 JP 2019091877
(43) Date of publication of application: 23.03.2022
(73) Proprietor: Hitachi High-Tech Corporation, Minato-ku Tokyo 105-6409 (JP)
(72) Inventor: OKABE, Shugo, Tokyo 105-6409 (JP); OKUSA, Takenori, Tokyo 105-6409 (JP)
(74) Representative: Strehl Schübel-Hopf & Partner
(86) International application number: PCT/JP2020/007328
(87) International publication number: WO 2020/230402

(56) References cited:
- EP-A1- 1 225 450
- CN-A- 108 593 949
- JP-A- 2004 333 259
- JP-A- 2010 032 215
- JP-A- 2012 026 732
- JP-A- 2014 139 589
- JP-A- 2014 206 380
- JP-A- 2014 206 380
- US-A1- 2004 265 173
- US-A1- 2011 300 021
- US-A1- 2013 125 671
- US-A1- 2016 122 808

## Description

### Technical Field

The present invention relates to an automatic analyzer.

### Background Art

An automatic analyzer is a device for automatically quantifying or qualitatively analyzing a specific component contained in a sample such as blood or urine. In an automatic analyzer, a reagent or reaction liquid containing a sample and a reagent for analysis is aspirated from an aspiration nozzle and transferred to a measurement unit or the like through a flow path connected to the aspiration nozzle. When a tube with a variable shape is provided between the aspiration nozzle and the measurement unit, the inner diameter may fluctuate due to bending or expansion and contraction of the tube, and the flow of the reaction liquid may change. The change of the flow of the reaction liquid makes the components of the reaction liquid transferred to the measurement unit non-uniform, and deteriorates the reproducibility of measurement results.

PTL 1 discloses an automatic analyzer that makes components of reaction liquid sent to a measurement unit uniform to improve the reproducibility of measurement results by connecting an aspiration nozzle directly to the measurement unit and allowing the aspiration nozzle fixed to the measurement unit to access a reaction vessel accommodating the reaction liquid.

### Citation List

### Patent Literature

PTL 1: JP-A-2014-139589

Further prior art is disclosed in US 2013/125671 A1, US 2016/122801 A1 and EP 1225450 A1.

### Summary of Invention

### Technical Problem

However, PLT 1 does not give consideration to simplifying control of a holding unit that holds the reaction vessel and the like having access to the aspiration nozzle fixed to the measurement unit and that rotates and moves up and down. In addition to the reaction vessel, the containers having access to the aspiration nozzle include a reagent container that accommodates a reagent and a washing tank that is used to clean the aspiration nozzle, and the rotation and the ascending and lowering of the holding unit that holds the plurality of containers is repeated many times, and therefore, it is desirable that the control of the holding unit be simplified as much as possible.

Therefore, an object of the invention is to provide an automatic analyzer capable of simplifying control of a holding unit that holds a plurality of containers having access to an aspiration nozzle whose position is fixed and that rotates and moves up and down.

### Solution to Problem

In order to achieve the above object, the invention provides an automatic analyzer as set forth in the appended claims.

### Advantageous Effect

According to the invention, it is possible to provide an automatic analyzer capable of simplifying control of a holding unit that holds a plurality of containers having access to an aspiration nozzle whose position is fixed and that rotates and moves up and down.

### Brief Description of Drawings

[FIG. 1] FIG. 1 is a plan view showing a configuration example of an automatic analyzer.
[FIG. 2] FIG. 2 is a perspective view showing an example of a reaction liquid and reagent transfer unit.
[FIG. 3] FIG. 3 is a plan view showing an arrangement example of a plurality of containers held by a holding unit.
[FIG. 4] FIG. 4 is a plan view showing an arrangement example of reagent containers and reagent nozzles.
[FIG. 5] FIG. 5 is a plan view showing an arrangement example of the reagent nozzles and an aspiration nozzle.
[FIG. 6] FIG. 6 is a transition diagram showing an example of an operation of the holding unit.
[FIG. 7] FIG. 7 is a plan view showing an arrangement example of the reagent nozzles, the aspiration nozzle, and detachable reagent containers.

### Description of Embodiments

Hereinafter, preferred embodiments of the automatic analyzer will be described with reference to the drawings, wherein Embodiment 3 is an embodiment of the invention and Embodiments 1, 2 and 4 are embodiments of the present disclosure whose constituent elements can be combined with the embodiment of the invention. The automatic analyzer is a device that analyzes a sample using a reaction liquid in which a sample and a reagent are reacted, such as an automatic biochemical analyzer, an automatic immunoanalyzer, an automatic gene analyzer. In addition, a mass spectrometer used for clinical examination and a coagulation analyzer that measures blood coagulation time can be mentioned. Further, the invention can also be applied to a composite system of a mass spectrometer, a coagulation analyzer, etc. an automatic biochemical analyzer, and an automatic immunoanalyzer, etc., or an automatic analysis system to which these are applied.

### [Embodiment 1]

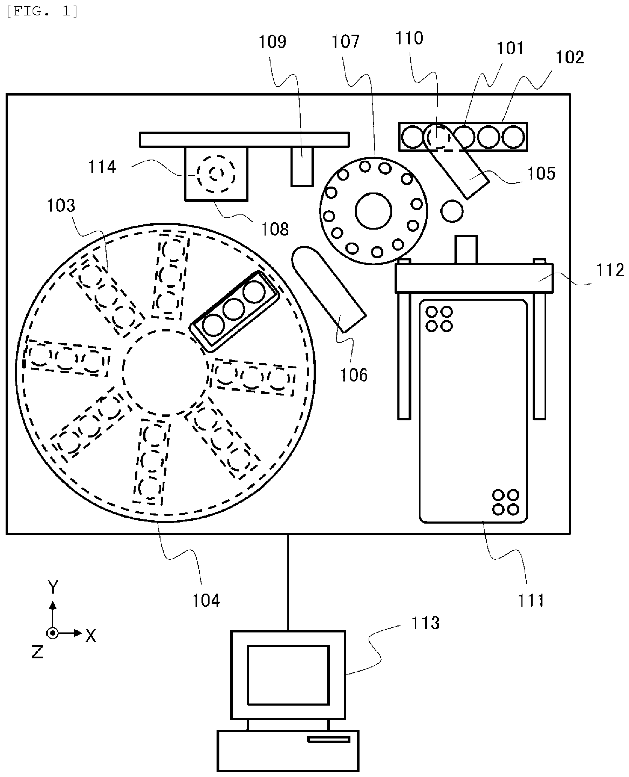

An example of the overall configuration of an automatic analyzer according to the present embodiment will be described with reference to FIG. 1. The automatic analyzer includes a sample transport unit 102, a reagent storage 104, a sample dispensing unit 105, a reagent dispensing unit 106, a reaction promotion part 107, a measurement unit 108, and a control unit 113. Each of the parts will be described below. The vertical direction is defined as Z direction, and the horizontal plane is defined as XY plane.

The sample transport unit 102 transports a sample container 101 accommodating a sample such as blood or urine to a sample aspiration position 110. The reagent storage 104 stores a reagent container 103 accommodating a reagent to be used for analysis in a predetermined temperature range.

The sample dispensing unit 105 dispenses the sample from the sample containers 101 transported to the sample aspiration position 110 to a reaction vessel arranged in the reaction promotion part 107. In addition, the reaction vessel to which the sample is to be dispensed and a dispensing tip to be used when dispensing the sample are stored in a consumable storage unit 111, and are transported to a predetermined position by a consumable transport unit 112. The reagent dispensing unit 106 dispenses a reagent from the reagent container 103 stored in the reagent storage 104 to the reaction vessel arranged in the reaction promotion part 107 and in which the sample is dispensed. The reaction promotion part 107 promotes the reaction between the sample and the reagent and generates reaction liquid by keeping the reaction vessel in which the sample and the reagent are dispensed within a predetermined temperature range.

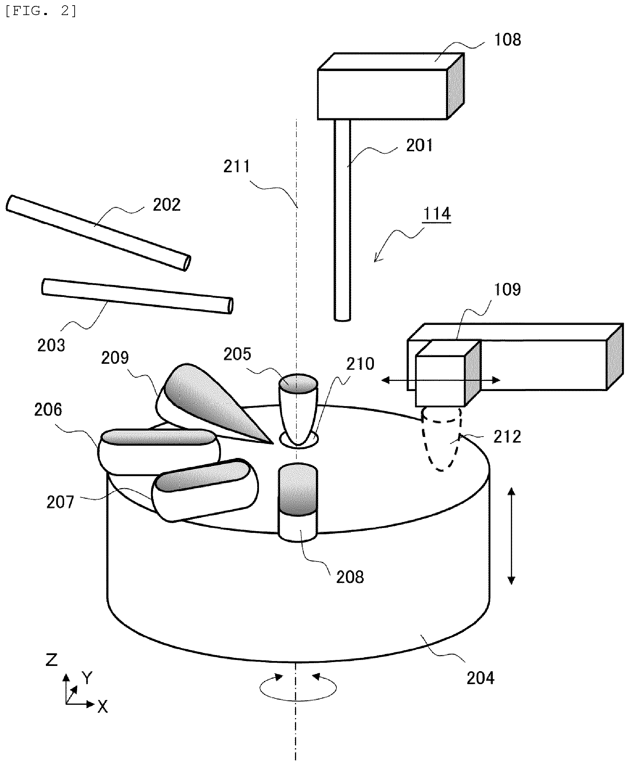

The measurement unit 108 is fixed to a housing of the automatic analyzer and performs optical or electrical measurement on the reaction liquid in the reaction vessel transported from the reaction promotion part 107 by a reaction vessel transport unit 109. For example, the absorbance of the reaction liquid, the amount of light emitted when a voltage is applied to the reaction liquid in which the reagent is added, the number of particles in the reaction liquid, the fluctuation of the current value and the voltage value when the reaction liquid comes into contact with an electrode film, etc. are measured. The reproducibility of such measurements deteriorates due to changes in the flow of the reaction liquid. Therefore, in order to reduce the changes in the flow of the reaction liquid, the reaction liquid is aspirated by an aspiration nozzle 201 (see FIG. 2), which is a nozzle fixed to the measurement unit 108. In addition, a reaction liquid and reagent transfer unit 114 allows the reaction vessel 205 (see FIG. 2) accommodating the reaction liquid to access the aspiration nozzle 201 so that the aspiration nozzle 201 fixed to the measurement unit 108 can aspirate the reaction liquid. Details of the reaction liquid and reagent transfer unit 114 will be described later with reference to FIG. 2. The control unit 113 is a device that controls each unit included in the automatic analyzer, and is implemented by, for example, a so-called computer.

An example of the reaction liquid and reagent transfer unit 114 in the present embodiment will be described with reference to FIG. 2. The reaction liquid and reagent transfer unit 114 has a holding unit 204 that holds a plurality of containers and that rotates and moves up and down. The holding unit 204 is arranged below the aspiration nozzle 201 fixed to the measurement unit 108, and is rotated in the XY plane around a rotation shaft 211 or moved up and down along the rotation shaft 211 by a drive source such as a motor (not shown). The containers held by the holding unit 204 are a reaction vessel 205, a first reagent container 206, a second reagent container 207, a third reagent container 208, a cleaning tank 209, and the like, and access to the aspiration nozzle 201 by the rotation and the ascending and lowering of the holding unit 204. In addition, the rotation shaft 211 has a predetermined distance from the aspiration nozzle 201 in the XY plane, and the containers are arranged on the circumference of a circle centered on the rotation shaft 211 with the predetermined distance as a radius so that the containers have access to the aspiration nozzle 201.

The reaction vessel 205 accommodating the reaction liquid is transported from the reaction promotion part 107 to an access point 212 by the reaction vessel transport unit 109. The access point 212 is a position where both the reaction vessel transport unit 109 and the holding unit 204 can access. The holding unit 204 is provided with a reaction vessel installation unit 210 on which the reaction vessel 205 is installed, and when the reaction vessel installation unit 210 moves to the access point 212 due to the rotation of the holding unit 204, the reaction vessel 205 is transferred.

The first reagent container 206, the second reagent container 207, and the third reagent container 208 accommodates different types of reagents including a first reagent, a second reagent, and a third reagent, respectively, and are detachable from the holding unit 204. The reagents accommodated in the reagent containers are auxiliary reagents that assist in measurement such as adjusting the light emission conditions of the reaction liquid and adjusting the flow path and the surface of the electrode of the measurement unit 108. In addition, a first reagent nozzle 202 capable of supplying the first reagent to the first reagent container 206 and a second reagent nozzle 203 capable of supplying the second reagent to the second reagent container 207 are fixed to a reagent tank (not shown). The reagent tank is fixed to the housing of the automatic analyzer. The reagent from the first reagent nozzle 202 or the second reagent nozzle 203 is supplied when the first reagent container 206 moves below the first reagent nozzle 202 or when the second reagent container 207 moves below the second reagent nozzle 203 due to the rotation of the holding unit 204.

The cleaning tank 209 is used for cleaning the aspiration nozzle 201. The cleaning of the aspiration nozzle 201 is performed by discharging cleaning water from a cleaning nozzle (not shown) to the aspiration nozzle 201 when the cleaning tank 209 moves below the aspiration nozzle 201 due to the rotation of the holding unit 204. The cleaning water discharged to the aspiration nozzle 201 is received in the washing tank 209 and then drained.

Since the rotation and the ascending and lowering of the holding unit 204 that holds a plurality of containers are repeated many times, it is desirable that the control regarding the movement of the holding unit 204 be simplified as much as possible. Therefore, in the present embodiment, the containers held by the holding unit 204 are arranged so that the control regarding the movement of the holding unit 204 can be simplified.

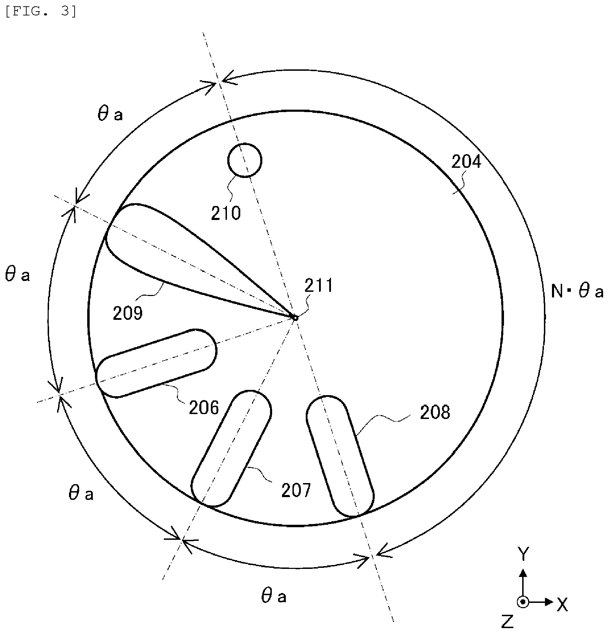

An arrangement example of a plurality of containers held by the holding unit 204 in the present embodiment will be described with reference to FIG. 3. The holding unit 204 in the present embodiment holds the reaction vessel 205 installed on the reaction vessel installation unit 210, the cleaning tank 209, the first reagent container 206, the second reagent container 207, and the third reagent container 208.

In the present embodiment, an angle between adjacent containers is an integer multiple of a predetermined angle θa, the angle between adjacent containers being an angle between adjacent containers in a circumferential direction and an angle around the rotation shaft 211, which is the center of rotation of the holding unit 204. Specifically, the angles between adjacent containers between the reaction vessel installation unit 210 and the cleaning tank 209, between the cleaning tank 209 and the first reagent container 206, between the first reagent container 206 and the second reagent container 207, and between the second reagent container 207 and the third reagent container 208 are defined as the angle θa. In addition, the angle between adjacent containers between the reaction vessel installation unit 210 and the third reagent container 208 is N·θa, which is the product of the integer N and the angle θa. FIG. 3 shows an example of θa = 45 degrees and N = 4.

According to the present embodiment, when any one of the plurality of containers held by the holding unit 204 accesses to the aspiration nozzle 201, driving parameters related to the rotation of the holding unit 204 can be shared, so that the control can be simplified. Specifically, since the holding unit 204 rotates based on an angle that is an integer multiple of the predetermined angle θa, a software related to the control can be configured in a simple manner.

### [Embodiment 2]

Embodiment 1 describes that the control related to the rotation of the holding unit 204 is simplified by setting the angle between adjacent containers of the containers held by the holding unit 204 as an integer multiple of the predetermined angle θa. When the containers held by the holding unit 204 include a plurality of reagent containers accommodating reagents, and reagent nozzles supplying the reagents to each of the plurality of reagent containers, it is desirable that each reagent be supplied simultaneously from all reagent nozzles. Therefore, in the present embodiment, the reagent nozzles are arranged so that the control related to the rotation of the holding unit 204 can be simplified and a plurality of reagents can be supplied simultaneously.

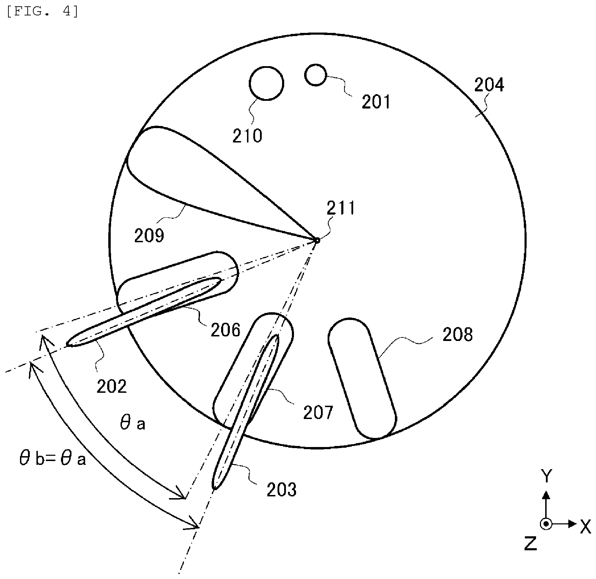

An arrangement example of the reagent containers and the reagent nozzles held by the holding unit 204 in the present embodiment will be described with reference to FIG. 4. Similar to Embodiment 1, the holding unit 204 in the present embodiment holds the reaction vessel 205 installed on the reaction vessel installation unit 210, the cleaning tank 209, the first reagent container 206, the second reagent container 207, and the third reagent container 208. In addition, independent of the holding unit 204, the first reagent nozzle 202 and the second reagent nozzle 203 fixed to a reagent tank (not shown) are provided.

In the present embodiment, the angle between reagent nozzles is set such that the first reagent and the second reagent are simultaneously supplied to the first reagent container 206 and the second reagent container 207, the angle being an angle between the first reagent nozzle 202 and the second reagent nozzle 203 and an angle around the rotation shaft 211 of the holding unit 204. Specifically, the angle between the reagent nozzles is set such that when the first reagent nozzle 202 and the first reagent container 206 overlap in the XY plane, the second reagent nozzle 203 and the second reagent container 207 overlap. FIG. 4 shows an example in which an angle between reagent nozzles θb is set to the angle between adjacent containers θa between the first reagent container 206 and the second reagent container 207. The angle between reagent nozzles θb is not limited to the angle between adjacent containers θa, and is appropriately set according to the inner diameter of the first reagent nozzle 202 and the first reagent container 206, and the width of the first reagent container 206 and the second reagent container 207 in the rotation direction of the holding unit 204.

According to the present embodiment, the angle between reagent nozzles is set such that when one reagent container and the reagent nozzle supplying the reagent to the reagent container overlap, the other reagent container and the other reagent nozzle overlap, so that a plurality of reagents can be supplied simultaneously. As a result, the time required for supplying the reagent can be shortened. Similar to Embodiment 1, since the drive parameters related to the rotation of the holding unit 204 can be shared, the control related to the rotation of the holding unit 204 can be simplified.

### [Embodiment 3]

Embodiment 1 describes that the control related to the rotation of the holding unit 204 is simplified by setting an angle between adjacent containers of containers held by the holding unit 204 as an integer multiple of the predetermined angle θa. Embodiment 2 describes that the angle between reagent nozzles is set so that a plurality of reagents can be supplied simultaneously. When a reagent nozzle whose position is fixed is provided in addition to the aspiration nozzle 201, it is not desirable for the nozzle to come into contact with a container that is not accessible. For example, in a case where the aspiration nozzle 201 comes into contact with the third reagent container 208 when the first reagent is supplied from the first reagent nozzle 202 to the first reagent container 206, the third reagent attached to the aspiration nozzle 201 adversely affects the measurement result of the measurement unit 108. Therefore, in the present embodiment, the nozzles are arranged so as to simplify the control related to the rotation of the holding unit 204 and to avoid contact between the container that is not to be accessed and the nozzle.

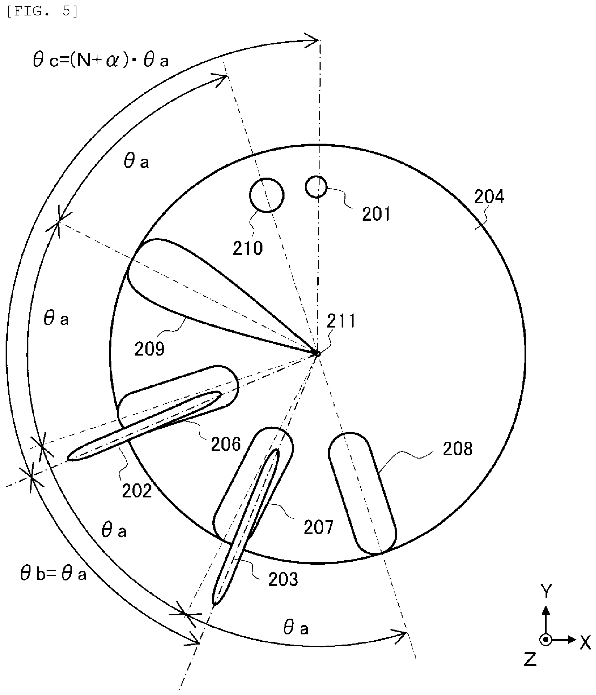

An arrangement example of a plurality of containers held by the holding unit 204, the aspiration nozzle 201, and the reagent nozzle in the present embodiment will be described with reference to FIG. 5. Similar to Embodiment 1, the holding unit 204 in the present embodiment holds the reaction vessel 205 installed on the reaction vessel installation unit 210, the cleaning tank 209, the first reagent container 206, the second reagent container 207, and the third reagent container 208. In addition, the angles between adjacent containers between the reaction vessel installation unit 210 and the cleaning tank 209, between the cleaning tank 209 and the first reagent container 206, between the first reagent container 206 and the second reagent container 207, and between the second reagent container 207 and the third reagent container 208 are the angle θa. The aspiration nozzle 201, the first reagent nozzle 202, and the second reagent nozzle 203 fixed to the housing of the automatic analyzer are provided. The angle between reagent nozzles θb between the first reagent nozzle 202 and the second reagent nozzle 203 is the angle θa.

In the present embodiment, the nozzles are arranged such that when any of the plurality of containers held by the holding unit 204 accesses to the aspiration nozzle 201, the first reagent nozzle 202 and the second reagent nozzle 203 are positioned between the containers. Alternatively, the nozzles are arranged such that when the first reagent and the second reagent are respectively supplied from the first reagent nozzle 202 and the second reagent nozzle 203 to the first reagent container 206 and the second reagent container 207, the aspiration nozzle 201 is positioned between the containers. Specifically, an inter-nozzle angle between reagent nozzles is set to a value obtained by multiplying a sum of an integer N and a decimal number α by the angle between adjacent containers θa, the angle being an angle between the aspiration nozzle 201 and the first reagent nozzle 202 and an angle around the rotation shaft 211 of the holding unit 204. FIG. 5 shows an example of the inter-nozzle angle θc = 112.5 degrees when N = 2, α = 0.5, and θa = 45 degrees. The decimal number α used to calculate the inter-nozzle angle θc is not limited to 0.5, and is appropriately set according to the outer diameter of the aspiration nozzle 201 or the first reagent nozzle 202, the first reagent container 206, and the width between the containers in the rotation direction of the holding unit 204.

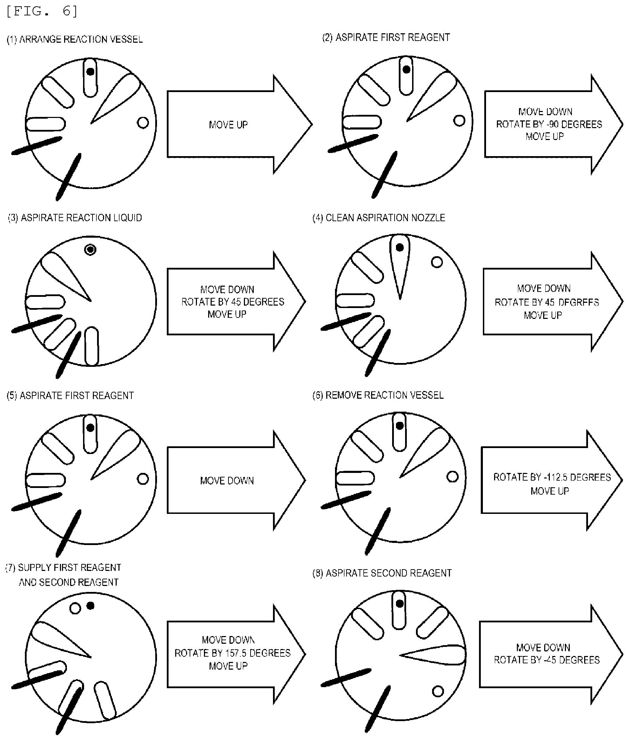

An example of an operation of the holding unit 204 that accesses a plurality of containers to the nozzles arranged as shown in FIG. 5 will be described with reference to FIG. 6. In FIG. 6, the aspiration nozzle 201, the first reagent nozzle 202, and the second reagent nozzle 203 fixed to the housing of the automatic analyzer are shown in black. The direction in which the holding unit 204 rotates clockwise is defined as the positive rotation direction.

### (1) Arrange Reaction Vessel

When the reaction vessel installation unit 210 moves to the access point 212 due to the rotation of the holding unit 204, the reaction vessel transport unit 109 transports the reaction vessel 205 from the reaction promotion part 107 and installs the reaction vessel 205 on the reaction vessel installation unit 210. At this time, the first reagent container 206 is arranged below the aspiration nozzle 201. When the reaction vessel 205 is installed on the reaction vessel installation unit 210, the reaction vessel transport unit 109 retracts.

### (2) Aspirate First Reagent

When the first reagent container 206 accesses the aspiration nozzle 201 due to the ascending of the holding unit 204, the aspiration nozzle 201 aspirates the first reagent from the first reagent container 206. By aspirating the first reagent, the flow path of the measurement unit 108 and the surface of the electrode are prepared. At this time, in the XY plane, the first reagent nozzle 202 and the second reagent nozzle 203 are arranged between the reaction vessel 205 installed on the reaction vessel installation unit 210 and the third reagent container 208, so that the first reagent nozzle 202 and the second reagent nozzle 203 do not come into contact with any of the containers.

### (3) Aspirate Reaction Liquid

When the reaction vessel 205 installed on the reaction vessel installation unit 210 accesses the aspiration nozzle 201 due to the lowering and rotation by -90 degrees and ascending of the holding unit 204, the aspiration nozzle 201 aspirates the reaction liquid from the reaction vessel 205. Since the reaction liquid is aspirated by the aspiration nozzle 201 fixed to the housing of the automatic analyzer, the flow of the reaction liquid does not change, and the components of the reaction liquid transferred to the measurement unit 108 are uniform. At this time, in the XY plane, the first reagent nozzle 202 is arranged between the first reagent container 206 and the second reagent container 207, and the second reagent nozzle 203 is arranged between the second reagent container 207 and the third reagent container 208, so that the first reagent nozzle 202 and the second reagent nozzle 203 do not come in contact with any of the containers.

### (4) Clean Aspiration Nozzle

When the cleaning tank 209 accesses the aspiration nozzle 201 due to the lowering and rotation by 45 degrees and ascending of the holding unit 204, an outer surface of aspiration nozzle 201 is cleaned. At this time, in the XY plane, the first reagent nozzle 202 is arranged between the second reagent container 207 and the third reagent container 208, and the second reagent nozzle 203 is arranged between the reaction vessel 205 installed on the reaction vessel installation unit 210 and the third reagent container 208, so that the first reagent nozzle 202 and the second reagent nozzle 203 do not come in contact with any of the containers.

### (5) Aspirate First Reagent

When the first reagent container 206 accesses the aspiration nozzle 201 due to the lowering and rotation by 45 degrees and ascending of the holding unit 204, the aspiration nozzle 201 aspirates the first reagent from the first reagent container 206. At this time, in the XY plane, the first reagent nozzle 202 and the second reagent nozzle 203 are arranged between the reaction vessel 205 installed on the reaction vessel installation unit 210 and the third reagent container 208, so that the first reagent nozzle 202 and the second reagent nozzle 203 do not come in contact with any of the containers.

### (6) Remove Reaction Vessel

When the reaction vessel 205 installed on the reaction vessel installation unit 210 moves to the access point 212 due to the lowering of the holding unit 204, the reaction vessel transport unit 109 removes the reaction vessel 205 from the reaction vessel installation unit 210 and transports the reaction vessel 205.

### (7) Supply First Reagent and Second Reagent

When the first reagent container 206 and the second reagent container 207 respectively access the first reagent nozzle 202 and the second reagent nozzle 203 due to the rotation by -112.5 degrees and ascending of the holding unit 204, the first reagent and the second reagent are respectively supplied to the first reagent container 206 and the second reagent container 207. At this time, in the XY plane, the aspiration nozzle 201 is arranged between the reaction vessel installation unit 210 and the third reagent vessel 208, so that the aspiration nozzle 201 does not come into contact with any of the containers.

### (8) Aspirate Second Reagent

When the second reagent container 207 accesses the aspiration nozzle 201 due to the lowering and rotation by 157.5 degrees and ascending of the holding unit 204, the aspiration nozzle 201 aspirates the second reagent from the second reagent container 207. At this time, in the XY plane, the first reagent nozzle 202 and the second reagent nozzle 203 are arranged between the reaction vessel installation unit 210 and the third reagent container 208, so that the first reagent nozzle 202 and the second reagent nozzle 203 do not come into contact with any of the containers.

After "(8) Aspirate Second Reagent", the step returns to "(1) Arrange Reaction Vessel" due to the lowering and rotation by -45 degrees of the holding unit 204. In addition, the reaction vessel installation unit 210, the cleaning tank 209, the first reagent container 206, and the second reagent container 207 held by the holding unit 204 are arranged according to an order of (3) to (5) and (8) in FIG. 6, that is, an order of accessing to the aspiration nozzle 201. With such an arrangement, the rotation of the holding unit 204 can be further reduced, so that the time required for the analysis step can be shortened.

According to the present embodiment, the inter-nozzle angle is set such that when any of the containers accesses to the aspiration nozzle 201, the reagent nozzles are positioned between the containers, and thus it is possible to avoid contact between the reagent nozzle and the container that does not access to the reagent nozzle. The inter-nozzle angle is set such that when the reagents are supplied from the reagent nozzles to the reagent containers, the aspiration nozzle 201 is positioned between the containers, and thus it is possible to avoid contact between the aspiration nozzle 201 and the container that does not access to the aspiration nozzle 201. By avoiding unnecessary contact between the nozzles and the containers, contamination of the reaction liquid or the reagents can be prevented, and the reproducibility of measurement results can be improved. Similar to Embodiment 1, since the drive parameters related to the rotation of the holding unit 204 can be shared, the control related to the rotation of the holding unit 204 can be simplified.

### [Embodiment 4]

Embodiment 1 describes that the control related to the rotation of the holding unit 204 is simplified by setting the angle between adjacent containers of the containers held by the holding unit 204 as an integer multiple of a predetermined angle θa. When a plurality of reagent containers accommodating reagents are included in the containers held by the holding unit 204, the reagent containers are replaced according to deterioration of the reagent, change of the type of reagent, or the like. In order to improve the workability of replacing the reagent containers, it is desirable that there is no aspiration nozzle or reagent nozzle above the reagent containers. Therefore, in the present embodiment, the nozzles and the containers are arranged so that the control related to the rotation of the holding unit 204 is simplified and the reagent containers can be detached in a state where there is no nozzle thereabove.

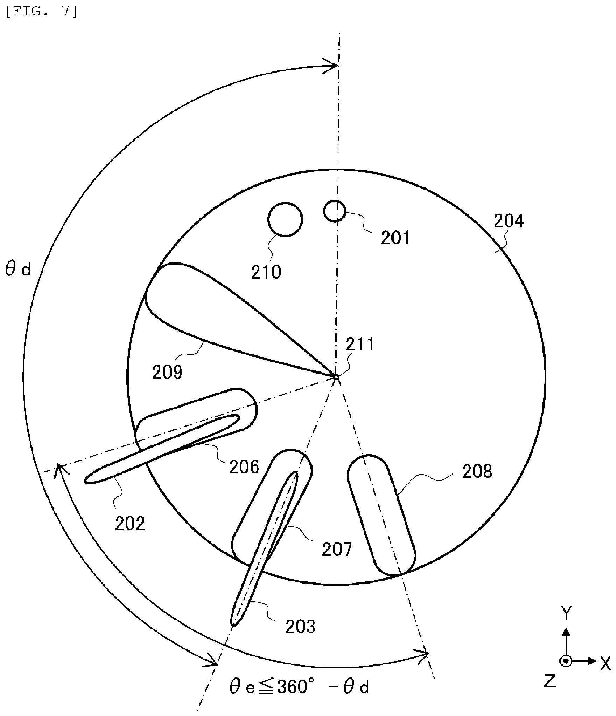

An arrangement example of a plurality of containers held by the holding unit 204, and the aspiration nozzle 201 and the reagent nozzles of the present embodiment will be described with reference to FIG. 7. Similar to Embodiment 1, the holding unit 204 in the present embodiment holds the reaction vessel 205 installed on the reaction vessel installation unit 210, the cleaning tank 209, the first reagent container 206, the second reagent container 207, and the third reagent container 208. In addition, the first reagent container 206, the second reagent container 207, and the third reagent container 208 are detachable containers that are detachable from the holding unit 204. Further, the aspiration nozzle 201, the first reagent nozzle 202, and the second reagent nozzle 203 fixed to the housing of the automatic analyzer are provided.

In the present embodiment, an angle around the rotation shaft 211 of the holding unit 204, which is an angle from an end nozzle of one of the aspiration nozzle 201 and the first reagent nozzle 202 and the second reagent nozzle 203 to an end nozzle of the other one of the aspiration nozzle and the first reagent nozzle 202 and the second reagent nozzle 203, is called an angle between end nozzles. In addition, an angle around the rotation shaft 211 of the holding unit 204, which is an angle from an end detachable container of one of a plurality of detachable containers to an end detachable container of other detachable containers of a plurality of detachable containers, is called an angle between end containers. A sum of the angle between end nozzles and the angle between end containers is set to be equal to or less than 360 degrees. FIG. 7 shows an example in which the angle between end nozzles θd = 157.5 degrees, the angle between end containers θe = 90 degrees, and θd + θe = 247.5 degrees, which is equal to or less than 360 degrees.

According to the present embodiment, the first reagent container 206, the second reagent container 207, and the third reagent container 208, which are three detachable containers, can be arranged between the aspiration nozzle 201 and the second reagent nozzle 203 due to the rotation of the holding unit 204. As a result, since there is no aspiration nozzle 201 or reagent nozzle above the detachable container, workability related to replacement of the detachable containers can be improved, and the time required for preparation of the analysis process can be shortened. Similar to Embodiment 1, since the drive parameters related to the rotation of the holding unit 204 can be shared, the control related to the rotation of the holding unit 204 can be simplified.

The four embodiments have been described above. The invention is not limited to the above embodiments, and the constituent elements may be modified without departing from the scope of the invention. In addition, a plurality of constituent elements disclosed in the above embodiments may be appropriately combined. Further, some constituent elements may be deleted from all the constituent elements shown in the above embodiments.

### Reference Sign List

- 101:: sample container
- 102:: sample transport unit
- 103:: reagent container
- 104:: reagent storage
- 105:: sample dispensing unit
- 106:: reagent dispensing unit
- 107:: reaction promotion part
- 108:: measurement unit
- 109:: reaction vessel transport unit
- 110:: sample aspiration position
- 111:: consumable storage unit
- 112:: consumable transport unit
- 113:: control unit
- 114:: reaction liquid and reagent transfer unit
- 201:: aspiration nozzle
- 202:: first reagent nozzle
- 203:: second reagent nozzle
- 204:: holding unit
- 205:: reaction vessel
- 206:: first reagent container
- 207:: second reagent container
- 208:: third reagent container
- 209:: cleaning tank
- 210:: reaction vessel installation unit
- 211:: rotation shaft
- 212:: access point

## Claims

1. An automatic analyzer, comprising:
an aspiration nozzle (201) whose position is fixed and that is configured to aspirate reaction liquid or a reagent;
a holding unit (204) that is configured to hold a plurality of containers (205 - 209) accommodating the reaction liquid or the reagent, and that is configured to rotate and move up and down, the containers (205 - 209) including a reagent container (206 - 208) accommodating the reagent, wherein
the holding unit (204) is configured to hold at least three of the containers (205 - 209), and
an angle between adjacent containers is an integer multiple of a predetermined angle (θa), the angle between adjacent containers being an angle between adjacent containers in a circumferential direction and an angle around a rotation center of the holding unit (204); and
a reagent nozzle (202, 203) whose position is fixed and that supplies the reagent,
**characterised in that**
an inter-nozzle angle is set such that:
- the reagent nozzle (202, 203) is positioned between the containers when any one of the containers accesses to the aspiration nozzle (201), or
- the aspiration nozzle (201) is positioned between the containers when the reagent is supplied from the reagent nozzle (202, 203) to the reagent container,
the inter-nozzle angle being an angle between the reagent nozzle (202, 203) and the aspiration nozzle (201) and an angle around the rotation center of the holding unit.

2. The automatic analyzer according to claim 1, further comprising:
a plurality of reagent nozzles (202, 203) whose positions are fixed and that are respectively configured to supply different types of reagents, wherein
the container includes a plurality of reagent containers (206 - 208) respectively accommodating different types of reagents, and
an angle between reagent nozzles (202, 203) is set to simultaneously supply different types of reagents from the reagent nozzles (202, 203) to the reagent containers, the angle between adjacent reagent nozzles (202, 203) being an angle between adjacent reagent nozzles (202, 203) in the circumferential direction and an angle around the rotation center of the holding unit (204).

3. The automatic analyzer according to claim 2, wherein
the angle between the reagent nozzles (202, 203) is set such that, when a certain reagent container overlaps with a certain reagent nozzle (202, 203), other reagent containers overlap with other reagent nozzles (202, 203).

4. The automatic analyzer according to claim 3, wherein
the angle between reagent nozzles (202, 203) is equal to the angle between adjacent containers.

5. The automatic analyzer according to claim 1, wherein
the inter-nozzle angle has a value obtained by multiplying a sum of an integer and a decimal number by the angle between adjacent containers.

6. The automatic analyzer according to claim 1, wherein
the containers (205 - 209) are arranged according to an order of accessing to the aspiration nozzle (201).

7. The automatic analyzer according to claim 1, further comprising:
a plurality of reagent nozzles (202, 203) whose positions are fixed and that supply the reagent, wherein
the container includes a plurality of detachable containers (205 - 209) that accommodate the reagent and are detachable from the holding unit (204), and
a sum of an angle (θd) between end nozzles and an angle (θe) between end containers (205 - 209) is equal to or less than 360 degrees, the angle (θd) between end nozzles being an angle from a nozzle at one end of the aspiration and reagent nozzles (201, 202, 203) to the nozzle at the other end of the aspiration and reagent nozzles (201, 202, 203) around the rotation center of the holding unit (204), and the angle (θe) between end containers is an angle from a detachable container at one end of the plurality of detachable containers (205 - 209) to the detachable container at the other end of the plurality of detachable containers (205 - 209) around the rotation center of the holding unit (204).

## Patentansprüche

1. Automatischer Analysator, umfassend:
eine Ansaugdüse (201), deren Position feststeht und die so konfiguriert ist, dass sie eine Reaktionsflüssigkeit oder ein Reagenz ansaugt;
eine Halteeinheit (204), die so konfiguriert ist, dass sie eine Vielzahl von Behältern (205 - 209) hält, die die Reaktionsflüssigkeit oder das Reagenz aufnehmen, und die so konfiguriert ist, dass sie sich dreht und auf und ab bewegt, wobei die Behälter (205 - 209) einen Reagenzbehälter (206 - 208) enthalten, der das Reagenz aufnimmt, wobei
die Halteeinheit (204) so konfiguriert ist, dass sie mindestens drei der Behälter (205 - 209) aufnehmen kann, und
ein Winkel zwischen benachbarten Behältern ein ganzzahliges Vielfaches eines vorbestimmten Winkels (θa) ist, wobei der Winkel zwischen benachbarten Behältern ein Winkel zwischen benachbarten Behältern in Umfangsrichtung und ein Winkel um ein Drehzentrum der Halteeinheit (204) ist; und weiterhin umfassend:
eine Reagenzdüse (202, 203), deren Position feststeht und die das Reagenz liefert,
**dadurch gekennzeichnet, dass**
ein Winkel zwischen den Düsen so festgelegt ist, dass:
- die Reagenzdüse (202, 203) zwischen den Behältern angeordnet ist, wenn einer der Behälter Zugang zur Ansaugdüse (201) hat, oder
- die Ansaugdüse (201) zwischen den Behältern angeordnet ist, wenn das Reagenz von der Reagenzdüse (202, 203) zum Reagenzbehälter geliefert wird,
wobei der Winkel zwischen den Düsen ein Winkel zwischen der Reagenzdüse (202, 203) und der Ansaugdüse (201) und ein Winkel um das Drehzentrum der Halteeinheit ist.

2. Automatischer Analysator nach Anspruch 1, ferner umfassend:
eine Vielzahl von Reagenzdüsen (202, 203), deren Positionen feststehen und die jeweils so konfiguriert sind, dass sie verschiedene Arten von Reagenzien liefern, wobei
die Behälter eine Vielzahl von Reagenzbehältern (206 - 208) enthalten, die jeweils verschiedene Arten von Reagenzien aufnehmen, und
ein Winkel zwischen Reagenzdüsen (202, 203) so festgelegt ist, dass von den Reagenzdüsen (202, 203) gleichzeitig verschiedene Arten von Reagenzien zu den Reagenzbehältern geliefert werden, wobei der Winkel zwischen benachbarten Reagenzdüsen (202, 203) ein Winkel zwischen benachbarten Reagenzdüsen (202, 203) in Umfangsrichtung und ein Winkel um das Drehzentrum der Halteeinheit (204) ist.

3. Automatischer Analysator nach Anspruch 2, wobei
der Winkel zwischen den Reagenzdüsen (202, 203) so festgelegt ist, dass, wenn sich ein bestimmter Reagenzbehälter mit einer bestimmten Reagenzdüse (202, 203) überlappt, sich andere Reagenzbehälter mit anderen Reagenzdüsen (202, 203) überlappen.

4. Automatischer Analysator nach Anspruch 3, wobei
der Winkel zwischen den Reagenzdüsen (202, 203) gleich dem Winkel zwischen benachbarten Behältern ist.

5. Automatischer Analysator nach Anspruch 1, wobei
der Winkel zwischen den Düsen einen Wert aufweist, der sich aus der Multiplikation einer Summe aus einer ganzen Zahl und einer Dezimalzahl mit dem Winkel zwischen benachbarten Behältern ergibt.

6. Automatischer Analysator nach Anspruch 1, wobei
die Behälter (205 - 209) in der Reihenfolge des Zugangs zur Ansaugdüse (201) angeordnet sind.

7. Automatischer Analysator nach Anspruch 1, ferner umfassend:
eine Vielzahl von Reagenzdüsen (202, 203), deren Positionen feststehen und die Reagenz liefern, wobei
die Behälter eine Vielzahl von abnehmbaren Behältern (205 - 209) umfassen, die das Reagenz aufnehmen und von der Halteeinheit (204) abnehmbar sind, und
eine Summe eines Winkels (θd) zwischen Enddüsen und eines Winkels (θe) zwischen Endbehältern (205 - 209) gleich oder kleiner als 360 Grad ist, wobei der Winkel (θd) zwischen Enddüsen ein Winkel von einer Düse an einem Ende der Ansaug- und Reagenzdüsen (201, 202, 203) zu der Düse an dem anderen Ende der Ansaug- und Reagenzdüsen (201, 202, 203) um das Drehzentrum der Halteeinheit (204) ist, und der Winkel (θe) zwischen Endbehältern ein Winkel von einem abnehmbaren Behälter an einem Ende der Vielzahl von abnehmbaren Behältern (205 - 209) zu dem abnehmbaren Behälter an dem anderen Ende der Vielzahl von abnehmbaren Behältern (205 - 209) um das Drehzentrum der Halteeinheit (204) ist.

## Revendications

1. Analyseur automatique, comprenant :
un embout (201) d'aspiration dont la position est fixe et qui est configuré pour aspirer un liquide de réaction ou un réactif ;
une unité (204) de maintien qui est configurée pour maintenir une pluralité de récipients (205 - 209) recevant le liquide de réaction ou le réactif, et qui est configurée pour tourner et se déplacer vers le haut et vers le bas, les récipients (205 - 209) incluant un récipient (206 - 208) pour réactif recevant le réactif, dans lequel
l'unité (204) de maintien est configurée pour maintenir au moins trois des récipients (205 - 209), et
un angle entre récipients adjacents est un multiple entier d'un angle prédéterminé (θa), l'angle entre récipients adjacents étant un angle entre récipients adjacents dans un sens circonférentiel et un angle autour d'un centre de rotation de l'unité (204) de maintien ; et
un embout (202, 203) pour réactif dont la position est fixe et qui alimente le réactif,
**caractérisé en ce que**
un angle inter-embouts est fixé de telle sorte que :
- l'embout (202, 203) pour réactif est positionné entre les récipients lorsque l'un quelconque des récipients accède à l'embout (201) d'aspiration, ou
- l'embout (201) d'aspiration est positionné entre les récipients lorsque le réactif est alimenté depuis l'embout (202, 203) pour réactif jusqu'au récipient pour réactif,
l'angle inter-embouts étant un angle entre l'embout (202, 203) pour réactif et l'embout (201) d'aspiration et un angle autour du centre de rotation de l'unité de maintien.

2. Analyseur automatique selon la revendication 1, comprenant en outre :
une pluralité d'embouts (202, 203) pour réactif dont les positions sont fixes et qui sont respectivement configurés pour alimenter différents types de réactifs, dans lequel
le récipient inclut une pluralité de récipients (206 - 208) pour réactif recevant respectivement différents types de réactifs, et
un angle entre embouts (202, 203) pour réactif est fixé pour alimenter simultanément différents types de réactifs depuis les embouts (202, 203) pour réactif jusqu'aux récipients pour réactif, l'angle entre embouts (202, 203) pour réactif adjacents étant un angle entre embouts (202, 203) pour réactif adjacents dans le sens circonférentiel et un angle autour du centre de rotation de l'unité (204) de maintien.

3. Analyseur automatique selon la revendication 2, dans lequel
l'angle entre les embouts (202, 203) pour réactif est fixé de telle sorte que, lorsqu'un certain récipient pour réactif se chevauche avec un certain embout (202, 203) pour réactif, d'autres récipients pour réactif se chevauchent avec d'autres embouts (202, 203) pour réactif.

4. Analyseur automatique selon la revendication 3, dans lequel
l'angle entre embouts (202, 203) pour réactif est égal à l'angle entre récipients adjacents.

5. Analyseur automatique selon la revendication 1, dans lequel
l'angle inter-embouts a une valeur obtenue en multipliant une somme d'un entier et d'un nombre décimal par l'angle entre récipients adjacents.

6. Analyseur automatique selon la revendication 1, dans lequel
les récipients (205 - 209) sont agencés selon un ordre d'accès à l'embout (201) d'aspiration.

7. Analyseur automatique selon la revendication 1, comprenant en outre
une pluralité d'embouts (202, 203) pour réactif dont les positions sont fixes et qui alimentent le réactif, dans lequel
le récipient inclut une pluralité de récipients (205 - 209) détachables qui reçoivent le réactif et sont détachables de l'unité (204) de maintien, et
une somme d'un angle (θd) entre embouts d'extrémité et d'un angle (θe) entre récipients (205 - 209) d'extrémité est égale ou inférieure à 360 degrés, l'angle (θd) entre embouts d'extrémité étant un angle depuis un embout à une extrémité des embouts (201, 202, 203) d'aspiration et pour réactif jusqu'à l'embout à l'autre extrémité des embouts (201, 202, 203) d'aspiration et pour réactif autour du centre de rotation de l'unité (204) de maintien, et l'angle (θe) entre récipients d'extrémité est un angle depuis un récipient détachable à une extrémité de la pluralité de récipients (205 - 209) détachables jusqu'au récipient détachable à l'autre extrémité de la pluralité de récipients (205 - 209) détachables autour du centre de rotation de l'unité (204) de maintien.
